# FASCICULE DE BREVET EUROPEEN

(11) **EP 1 241 822 B1**
(45) Date de publication et mention de la délivrance du brevet: **08.05.2019**
(21) Numéro de dépôt: 02290638.2
(22) Date de dépôt: 13.03.2002
(51) Int. Cl.: H04L 1/16, H04L 1/18, H04L 1/00, H04W 28/06, H04W 24/00

(54) **Unite d'émission de blocs de données en mode acquitte vers une station mobile**
ARQ-Sendeeinheit zum Senden von Datenblöcken an eine Mobilstation
Transmitter of data blocks in ARQ mode to a mobile station

(30) Priorité: 16.03.2001 FR 0103614
(43) Date de publication de la demande: 18.09.2002
(60) Demande divisionnaire: 10195884.1
(73) Titulaire: BlackBerry Limited, Waterloo, ON N2K 0A7 (CA)
(72) Inventeur: Lucidarme, Thierry, 78180 Montigny-le-Bretonneux (FR)
(74) Mandataire: Noble, Nicholas

(56) Documents cités:
- US-A- 5 602 831
- PATENT ABSTRACTS OF JAPAN vol. 2000, no. 06, 22 septembre 2000 (2000-09-22) & JP 2000 069037 A (NIPPON TELEGR &TELEPH CORP <NTT>), 3 mars 2000 (2000-03-03)

## Description

La présente invention concerne l'utilisation de techniques de transmission de paquets en mode acquitté dans des systèmes de radiocommunication.

L'invention concerne notamment les techniques qui font appel à une répétition automatique des paquets ou blocs dont l'émetteur constate, d'après les informations d'acquittement retournées par le récepteur, qu'ils n'ont pas été correctement reçus (méthodes de type ARQ, « Automatic Repeat reQuest »).

L'application de ces techniques aux radiocommunications avec les mobiles présente des particularités du fait que les erreurs affectant les blocs transmis sur le canal radio ne sont pas décorrélées. Ces erreurs se manifestent par des évanouissements de canal dont la durée moyenne est une fonction décroissante de la vitesse de la station mobile (fading de Rayleigh). Pour une station mobile lente, un tel évanouissement de canal dure typiquement de l'ordre d'une à plusieurs centaines de millisecondes.

Un message d'acquittement retourné par le destinataire des blocs, par exemple en réponse à une requête de l'émetteur (« polling »), porte habituellement sur une série de blocs émis. Lorsque cette série se termine dans une période d'évanouissement du canal, il y a de fortes chances qu'un ou plusieurs blocs subséquents aient aussi été mal reçus. L'émetteur répète les blocs dont il a pu constater la mauvaise réception, mais il doit attendre le prochain message d'acquittement avant de pouvoir répéter ces blocs subséquents. Cette attente conduit à des retards dans la transmission des blocs. Or le retard de transmission est souvent un problème critique dans ce genre de système.

Le brevet US 5 602 831 décrit une unité d'émission de blocs de données sur un canal de communication, comportant un lien radio entre deux stations, dont une mobile. Des informations d'acquittement peuvent être transmises par la station réceptrice vers l'unité d'émission. La dimension des blocs de données peut être variée en fonction de la vitesse de la station mobile.

Un but de la présente invention est de proposer un procédé efficace de transmission de données en mode paquets sur des liens radio. Un autre but est de réduire les retards de transmission qui peuvent résulter des mécanismes d'ARQ employés dans ces systèmes.

L'invention propose ainsi une unité d'émission de blocs de données sur un canal de communication selon la revendication 1 et un procédé selon la revendication 8 comportant un lien radio entre deux stations incluant une station mobile, comprenant des moyens d'obtention d'une séquence de blocs de données à émettre sur ledit canal, des moyens de réception d'informations d'acquittement des blocs de la séquence depuis une unité destinataire et des moyens de contrôle de l'émission des blocs de la séquence sur le canal sur la base d'informations de contrôle d'émission incluant les informations d'acquittement reçues de l'unité destinataire et un indicateur d'évanouissement déduit desdites informations d'acquittement et d'une grandeur estimée liée à une vitesse de déplacement de la station mobile.

Cette unité prend en compte la vitesse de la station mobile dans le processus de contrôle de l'émission des blocs. Ce contrôle peut concerner la sélection des blocs à répéter dans un mécanisme de type ARQ, ou d'autres aspects tels que par exemple la sélection bloc par bloc du niveau de protection contre les erreurs de transmission utilisé sur l'interface radio.

Les moyens de contrôle d'émission peuvent notamment prendre des mesures appropriées en anticipant la mauvaise réception d'un ou plusieurs blocs lorsque les informations d'acquittement reçues révèlent le début d'un évanouissement de canal sur une durée plus courte qu'une durée typique d'évanouissement correspondant à la vitesse de déplacement de la station mobile.

D'autres particularités et avantages de la présente invention apparaîtront dans la description ci-après d'exemples de réalisation non limitatifs, en référence aux dessins annexés, dans lesquels :
- la figure 1 est un schéma d'un réseau de type GPRS auquel l'invention peut s'appliquer ;
- la figure 2 est un schéma synoptique d'une unité de contrôle de paquets d'un tel réseau, adaptée à la mise en oeuvre de l'invention ;
- la figure 3 est un schéma synoptique d'une unité d'émission selon l'invention, faisant partie d'une contrôle de paquets selon la figure 2 ;
- la figure 4 est un organigramme d'une procédure de contrôle d'émission de blocs par une unité selon l'invention ;
- les figures 5, 7 et 9 sont des diagrammes illustrant des exemples de transmission de blocs d'une séquence par une unité selon l'invention ;
- à titre de comparaison, les figures 6, 8 et 10 sont des diagrammes correspondant respectivement à ceux des figures 5, 7 et 9 en l'absence d'application de l'invention.

L'invention est décrite ci-après dans son application à des réseaux GPRS (« General Packet Radio Service »). Ces réseaux ont été développés pour permettre la transmission de données en mode paquets dans des réseaux cellulaires de type GSM (« Global System for Mobile communications »). Pour l'illustration, on considérera la transmission de paquets dans le sens descendant, c'est-à-dire de l'infrastructure du réseau vers les stations mobiles. On comprendra toutefois que l'invention est applicable dans les deux sens de communication. Elle est d'autre part applicable à divers autres systèmes, notamment de type UMTS (« Universal Mobile Télécommunications System »).

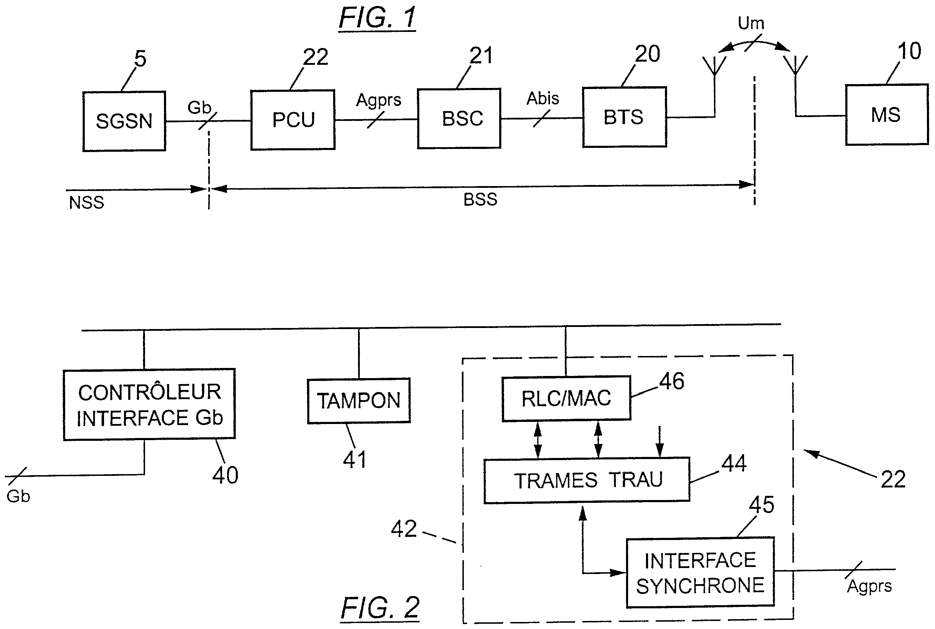

Le réseau GPRS illustré sur la figure 1 est bâti sur une infrastructure GSM, et classiquement divisé en un coeur de réseau, aussi appelé sous-système de réseau et de commutation ou NSS (« Network and Switching Subsystem »), et un réseau d'accès radio également appelé sous-système de stations de base ou BSS (« Base Station Subsystem »).

Pour le service de paquets, les commutateurs du NSS sont appelés noeuds de support GPRS ou GSN (« GPRS Support Node »). On distingue les SGSN (« Serving GSN ») 5 qui sont reliés au BSS par l'intermédiaire d'une interface appelée Gb, et les GGSN (« Gateway GSN », non représentés) qui servent de passerelle avec des réseaux extérieurs de transmission de paquets, tels que par exemple le réseau Internet.

Une description générale de l'interface radio, appelée Um, entre les stations mobiles (MS) 10 et les stations de base (BTS) 20 du BSS est fournie dans la spécification technique ETSI TS 101 350, « Digital cellular telecommunications system (Phase 2+); General Packet Radio Service (GPRS) ; Overall description of the GPRS radio interface ; Stage 2 (GSM 03.64, version 8.5.0, Release 1999), publiée par l'ETSI (European Télécommunications Standards Institute) en août 2000.

Chaque station de base 20 est supervisée par un contrôleur de stations de base ou BSC (« Base Station Controller ») 21 par l'intermédiaire d'une interface appelée Abis. Pour gérer la transmission de paquets GPRS, le BSS comprend en outre une entité 22 appelée unité de contrôle de paquets ou PCU (« Packet Control Unit »). La localisation du PCU à l'intérieur du BSS n'est pas normalisée. Dans l'exemple représenté sur la figure 1, le PCU 22 est situé entre le BSC 21, avec lequel il communique à travers une interface appelée Agprs, et le NSS, avec lequel il communique à travers l'interface Gb.

La figure 2 illustre une structure possible d'un PCU 22 situé entre un SGSN 5 et un BSC 21, comme dans l'exemple de la figure 1. La référence 40 désigne le contrôleur d'interface Gb pour la liaison avec le SGSN 5.

L'interface Gb est de type asynchrone. Elle repose sur le protocole de relais de trame (FR, « Frame Relay »), ainsi qu'un protocole appelé BSSGP (« BSS GPRS Protocol ») qui transporte des informations de routage et de qualité de service entre le BSS et le SGSN. Le contrôleur d'interface Gb 40 assure la liaison physique avec le SGSN 5, ainsi que les procédures propres aux protocoles FR et BSSGP.

Les liaisons entre le PCU 22 et les BTS 20 à travers l'interface Agprs sont de type synchrone. En conséquence, les données manipulées par le PCU 22 entre le contrôleur d'interface Gb 40 et le contrôleur d'interface Agprs 42 transitent par une mémoire tampon 41 où sont enregistrées des files d'attente de paquets.

Entre le PCU 22 et la BTS 20, les informations sont portées par des trames de type TRAU (« Transcoder/Rate Adaptor Unit ») de 320 bits, à raison d'une trame toutes les 20 ms. Ces trames TRAU sont mises en forme et traitées par un module 44 et transmises par l'intermédiaire de circuits d'interface synchrone 45 qui réalisent des sous-voies MIC à 16 kbit/s avec les BTS 20. Plusieurs sous-voies à 16 kbits peuvent être multiplexées sur l'interface Agprs et séparées par le BSC 21 pour l'acheminement vers les BTS. Un module 46 du contrôleur d'interface Agprs 42 met en oeuvre les protocoles radio de la couche 2 du modèle ISO, à savoir les protocoles RLC/MAC (« Radio Link Control / Medium Access Control ») décrits dans la norme européenne ETSI EN 301 349, Digital cellular telecommunications system (Phase 2+); General Packet Radio Service (GPRS) ; Mobile Station (MS) - Base Station System (BSS) interface ; Radio Link Control/Medium Access Control (RLC/MAC) protocol (GSM 04.60, version 8.3.1, Release 1999), publiée par l'ETSI en octobre 2000.

La sous-couche RLC réalise l'interface avec le protocole de couche supérieure, appelé LLC (« Logical Link Control »). Elle assure la segmentation et le réassemblage des unités de données du protocole LLC (LLC-PDU), qui sont échangées de manière asynchrone sur l'interface Gb. Elle produit des blocs de données RLC auxquels la sous-couche MAC rajoute un en-tête MAC d'un octet.

Dans le sens descendant, du PCU vers les MS, l'en-tête MAC de chaque bloc RLC/MAC inclut :
- un champ USF de trois bits (« Uplink State Flag »), servant à indiquer quelle station mobile est autorisée à utiliser une ressource montante correspondant à la ressource descendante sur laquelle est transmise le bloc RLC/MAC ;
- un champ de contrôle d'acquittement de trois bits, incluant un sous-champ d'un bit S/P (« Supplementary/Polling ») indiquant si le champ de contrôle d'acquittement est actif (S/P = 1) ou inactif (S/P = 0) et un sous-champ de deux bits RRBP (« Relative Reserved Block Period ») spécifiant de manière unique un bloc montant dans lequel la station mobile destinataire doit transmettre un message d'acquittement ;
- un champ « Payload Type » de deux bits spécifiant le type de bloc RLC suivant (données, contrôle, ...).

On s'intéresse ici à la transmission de blocs de données RLC. Chacun de ces blocs comporte un en-tête RLC suivant l'octet d'en-tête MAC. Cet en-tête RLC comporte notamment les informations suivantes :
- identité de flux temporaire TFI (« Temporary Flow Identity »), composée de cinq bits identifiant le flux de blocs temporaire (TBF, « Temporary Block Flow ») d'où proviennent les données RLC du bloc. Un TBF est une connexion supportant le transfert unidirectionnel de LLC-PDU sur des canaux physiques de données. Un TBF est temporaire, c'est-à-dire qu'il n'est maintenu que pendant le transfert de données ;
- un numéro de séquence du bloc BSN (« Bloc Sequence Number ») de SNS bits, qui contient le numéro de séquence du bloc RLC/MAC dans le TBF, *modulo* 2^{SNS}, SNS étant un nombre prédéfini.

La sous-couche MAC gère en outre le multiplexage des blocs relevant des différents TBF actifs sur les canaux physiques disponibles, en arbitrant entre les différents utilisateurs mobiles par un mécanisme de planification (« scheduling »).

L'entité RLC/MAC de la station mobile destinataire des blocs de données descendants d'un TBF tient à jour pour ce flux une variable d'état de réception V(R) qui indique le BSN suivant le BSN le plus élevé reçu sur ce TBF. Le nombre V(R)-1 (modulo 2^{SNS}) pointe ainsi sur la fin d'une fenêtre de réception dont la longueur est de WS blocs RLC/MAC. A réception d'une commande de « polling », c'est-à-dire d'un bloc dont l'en-tête MAC a le bit S/P = 1, la MS retourne, dans le bloc montant spécifié par le sous-champ RRBP, un message d'acquittement PDAN (« Packet Downlink Ack/Nack ») qui comporte notamment :
- un champ SSN (« Starting Sequence Number ») de SNS bits contenant la variable V(R) courante pour le TBF ; et
- un champ RBB (« Receive Block Bitmap ») représentant une cartographie binaire (bitmap) de WS bits indiquant ceux des blocs de la fenêtre de réception qui ont été correctement reçus. Un acquittement positif du bloc BSN = (SSN - i) *mod* 2^{SNS} est indiqué par la valeur 1 du bit de rang i (1 ≤ i ≤ k) du bitmap représenté par RRB, et un acquittement négatif par la valeur 0.

A réception du message PDAN, le PCU met à jour pour le TBF une variable d'état d'acquittement V(A) qui contient le BSN du plus ancien bloc qui n'a pas été acquitté positivement, ainsi qu'un tableau V(B) à WS entrées indiquant les états d'acquittement respectifs de WS blocs consécutifs à partir de celui désigné par V(A), ces WS blocs consécutifs formant une fenêtre d'émission. Les états d'acquittement possibles sont : acquittement positif (ACK) ; acquittement négatif (NACK) ; et acquittement non encore reçu (ACK_PENDING). Les variables d'état V(A) et V(B) sont directement déduites des champs SSN et RBB reçus dans le dernier message PDAN. Le protocole RLC/MAC n'autorise la transmission de blocs qu'à l'intérieur de la fenêtre d'émission ainsi gérée par le PCU. En dehors de cette fenêtre, la transmission des blocs est inhibée.

Dans le cas du GPRS, la norme spécifie les valeurs SNS = 7, WS = 64. Un niveau de protection variable peut être sélectionné bloc par bloc à l'intérieur d'un TBF, par le choix d'un schéma de codage CS (« Coding Scheme ») parmi quatre schémas CS-1 à CS-4 spécifiés dans la norme européenne ETSI EN 300 909, Digital cellular telecommunications system (Phase 2+) ; Channel coding (GSM 05.03, version 8.5.1, Release 1999), publiée par l'ETSI en novembre 2000.

Le schéma CS-4 n'utilise pas de codage correcteur d'erreurs, c'est-à-dire que le rendement de codage vaut 1 : seule une séquence de vérification de bloc (BCS « Block Check Sequence ») est adjointe aux blocs de données. Les schémas CS-1 à CS-3 utilisent un code convolutif de rendement 1/2 après l'adjonction de la séquence BCS. Aucun poinçonnage n'est effectué dans le schéma CS-1 (qui offre le plus haut niveau de protection), tandis que des poinçonnages sont appliqués dans les schémas CS-2 et CS-3 afin qu'ils donnent lieu à des rendements de codage globaux d'environ 2/3 et d'environ 3/4, respectivement.

Le codage de canal CS-i (1 ≤ i ≤ 4) est appliqué au niveau du protocole de couche physique, c'est-à-dire dans les BTS pour les liaisons descendantes. Chaque bloc RLC/MAC codé se compose de 456 bits et est transmis dans des intervalles de temps correspondants de quatre trames TDMA sur une fréquence porteuse, les trames TDMA successives (« Time-Division Multiple Access ») étant chacune décomposées en huit intervalles de temps pour assurer un multiplexage temporel de canaux.

Un motif de huit bits de signalisation SB est inséré dans chaque trame codée (deux bits par intervalle de temps) afin d'indiquer notamment quel schéma de codage a été appliqué par l'émetteur.

Ces bits de signalisation sont extraits du bloc codé reçu par le destinataire, pour lui permettre d'identifier le schéma de codage. Le récepteur procède alors au décodage adéquat du bloc qui donnera lieu à un acquittement positif s'il est réussi et si la BCS décodée est cohérente avec le contenu du bloc.

Le schéma de codage appliqué sur la liaison descendante est déterminé de façon connue en soi par le PCU en fonction de mesures de qualité de réception sur le lien radio, selon des mécanismes d'adaptation de lien qui cherchent à atteindre un objectif en termes de taux de blocs erronés afin d'optimiser le débit brut. Le schéma sélectionné est inséré dans la trame TRAU portant le bloc pour être appliqué par la BTS.

Les normes précitées de l'ETSI spécifient aussi une extension du système GPRS, utilisant la modulation EDGE (« Enhanced Data for GSM Evolution »). Cette extension est appelée EGPRS (EDGE-GPRS).

Dans un système EGPRS, la couche RLC/MAC utilise SNS = 11, et WS réglable entre 64 et 1024. Les en-têtes RLC et MAC sont regroupés en un seul en-tête RLC/MAC qui n'a plus le champ « Payload Type » et dans lequel le bit S/P est remplacé par un sous-champ ES/P de deux bits permettant de spécifier différents formats d'acquittement en cas de polling (ES/P ≠ 00). Neuf schémas de modulation et de codage, appelés MCS-1 à MCS-9, sont prévus. Le schéma utilisé pour un bloc donné, ainsi qu'un schéma de poinçonnage éventuellement appliqué, sont indiqués dans un champ CPS (« Coding and Puncturing Scheme indicator ») de l'en-tête RLC/MAC EGPRS.

L'ensemble de l'en-tête RLC/MAC EGPRS fait l'objet d'un codage de canal distinct de celui des données du bloc. Le niveau de protection de cet en-tête contre les erreurs de transmission est plus élevé que celui des données pour assurer une meilleure robustesse des informations de signalisation.

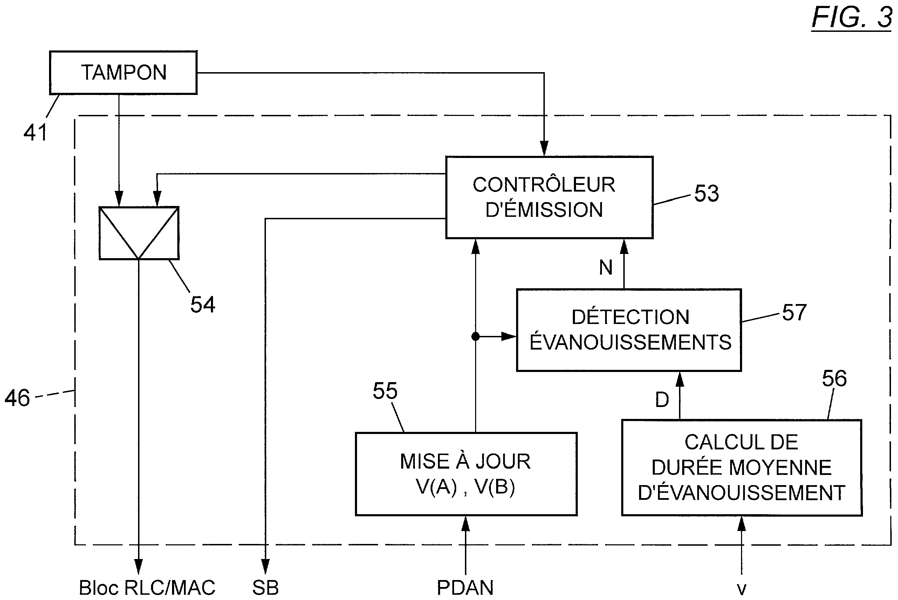

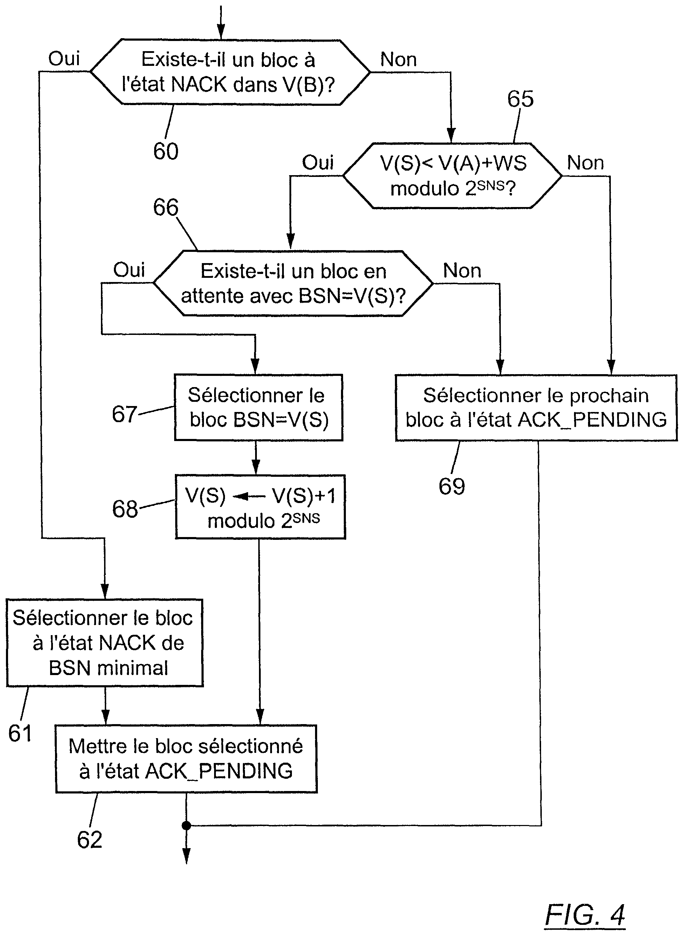

La figure 3 illustre une organisation possible de l'entité RLC/MAC 46 du PCU pour un TBF descendant. Les données des LLC-PDU, segmentées en blocs RLC/MAC, sont conservées dans la mémoire tampon 41 jusqu'à ce que ces blocs aient été acquittés positivement. Le contrôleur d'émission 53 assure notamment les fonctions suivantes :
- sélection d'un TBF pour chaque période d'émission sur le canal, par un mécanisme connu de planification ;
- pour le TBF sélectionné, sélection d'un bloc RLC/MAC à émettre, sur la base notamment des variables d'états V(A) et V(B) et de la présence ou absence d'un nouveau bloc dans la file d'attente relative au TBF dans le tampon d'émission 41 (cette sélection du bloc RLC à émettre sera expliquée plus en détail en référence à la figure 4) ;
- sélection du schéma de codage CS-i que la BTS 20 appliquera au bloc, et affectation de la valeur correspondante au motif de huit bits de signalisation SB. Si le mécanisme d'ARQ a conduit à sélectionner un bloc déjà émis auparavant, le schéma de codage retenu peut être le même (cas GPRS) ou un schéma plus robuste (option en EGPRS). Si le bloc sélectionné est un nouveau bloc, le schéma de codage est déterminé par un mécanisme d'adaptation de lien connu en soi ;
- lorsque le bloc sélectionné est un nouveau bloc, extraction du tampon 41 d'un nombre de bits d'information correspondant à la taille définie pour le schéma de codage retenu ; sinon, nouvelle extraction des données du bloc précédemment émis ;
- détermination du contenu de l'en-tête RLC/MAC et commande de l'insertion de cet en-tête par le module 54. Le contrôleur 53 positionne notamment les champs TFI et BSN ainsi que le champ de contrôle d'acquittement S/P-RRBP pour demander les acquittements de la part de la MS (« polling »). A titre d'illustration, il peut faire un « polling » tous les douze blocs émis ;

Le bloc RLC/MAC délivré par le module 54 et les bits SB font partie des informations placées dans une trame TRAU transmise à la BTS concernée.

Le module 55 représenté sur la figure 3 traite les messages PDAN reçus en provenance de la MS destinataire pour mettre à jour les variables d'état V(A) et V(B) du TBF. Les blocs du TBF qui ont été émis par le PCU après le bloc de « polling » auquel répond un message PDAN restent à l'état ACK_PENDING, tandis que les autres blocs qui ont été émis jusqu'à ce bloc de « polling » sont mis à l'état ACK ou NACK selon la valeur du bit correspondant du bitmap RBB (en EGPRS, ce bitmap RBB peut être transmis sous forme comprimée, et il doit alors être décodé de façon correspondante par le module 55).

Conformément à l'invention, le contrôle de l'émission des blocs sur un TBF dépend aussi d'une estimation de la vitesse de déplacement v de la station mobile concernée. Plus généralement, tout paramètre, mesuré ou estimé, lié à cette vitesse de déplacement peut être utilisé.

A titre d'exemple, la vitesse v peut être estimée de façon connue en soi en analysant les variations dans le temps de la puissance des signaux radio reçus par la BTS 20 en provenance de la MS 10 (ou en sens inverse par la MS 10 en provenance de la BTS 20). Un exemple possible de méthode d'estimation est décrit dans FR-A-2 782 227. Les estimations de vitesse parviennent au PCU 22 dans des trames TRAU montantes.

Celui-ci comprend un module 56 qui détermine une durée typique d'évanouissement D à partir de la vitesse estimée v. Cette durée D peut notamment être une durée moyenne d'évanouissement calculable comme la largeur du pic de la fonction de corrélation du processus statistique de fading de Rayleigh selon une modélisation donnée, par exemple le modèle de Jakes. Les valeurs de la durée D en fonction de v peuvent être calculées une fois pour toutes et mémorisées dans une table de correspondance du module 56. Ces valeurs de D sont avantageusement exprimées en nombres entiers de blocs émis, sachant qu'il y a typiquement un bloc toutes les 20 ms par TBF.

A titre d'exemple, pour une transmission sur une fréquence porteuse à 900 MHz et une station mobile qui se déplace à 1 km/h, la durée moyenne d'un évanouissement de plus de -20 dB par rapport à la valeur RMS (« root-mean square ») est d'environ 130 ms, et on peut prendre D = 6.

Un module de détection d'évanouissements 57 de l'entité RLC/MAC examine les messages PDAN (ou les variables d'état V(A) et V(B) qui en sont déduites par le module 55) pour détecter certains évanouissements du canal radio sur la base des blocs acquittés négativement. Les évanouissements faisant l'objet de cette détection sont ceux qui portent sur un ou plusieurs blocs consécutifs émis à la fin de la période de « polling » qui se termine par le bloc de « polling » auquel répond le message PDAN, et dont la durée détectée est inférieure à D. Il y a de fortes chances pour qu'un ou plusieurs blocs suivants, émis juste après ce bloc de « polling », aient également expérimenté les conditions d'évanouissement. Pour augmenter cette probabilité, le module 56 peut adopter une durée D un peu réduite par rapport à la moyenne calculée (par exemple D = 5 dans l'exemple numérique précédent).

Dans l'exemple représenté, la sortie du module de détection 57 après réception d'un message PDAN est un nombre N estimant le nombre de blocs à l'état ACK_PENDING qui ont émis juste après le bloc de « polling » en expérimentant vraisemblablement des conditions d'évanouissement détectées d'après ce message PDAN.

En d'autres termes, si le module 57 détecte juste à la fin de la période de « polling » un évanouissement portant sur M blocs avec M < D, alors, il prend N = D - M. Sinon, il prend N = 0.

En EGPRS, on a vu que l'en-tête RLC/MAC est plus protégé que les données du bloc RLC. En général, le contenu de l'en-tête résiste aux conditions d'évanouissement, de sorte que, même si le bloc qui porte la commande de « polling » (S/P = 1 ou ES/P ≠ 00) est acquitté négativement, cette commande peut être obtenue et traitée par la MS. La détection par le module 57 d'un évanouissement portant sur M blocs EGPRS juste à la fin de la période de « polling » résulte alors de la constatation de M blocs consécutifs à l'état NACK dans V(B).

En GPRS, il n'est pas possible de protéger davantage le champ de contrôle d'acquittement S/P-RRBP que les données d'un bloc. Toutefois, le contrôleur 53 peut sélectionner bloc par bloc le schéma de codage appliqué CS-i. On procède avantageusement comme suit. Chaque fois qu'un schéma de codage autre que CS-1 est déterminé par les mécanismes d'adaptation de lien, le contrôleur 53 sélectionne un schéma plus robuste aux erreurs pour chaque bloc dont l'en-tête MAC a le bit S/P = 1. En particulier le schéma CS-1 (niveau de protection maximal) peut être retenu de façon systématique pour ces blocs de « polling ». Dans ce cas, la détection par le module 57 d'un évanouissement portant sur M blocs GPRS juste à la fin de la période de « polling » résulte de la constatation de M-1 blocs consécutifs à l'état NACK dans V(B) suivis par un bloc à l'état ACK correspondant au bloc de « polling » transmis de façon plus robuste.

La figure 4 montre une procédure applicable par le contrôleur 53 pour commander l'émission d'un bloc d'un TBF qui a été sélectionné par le processus de planification d'émission, conformément au protocole RLC. Le contrôleur examine d'abord le tableau V(B) pour déterminer s'il désigne un ou plusieurs blocs à l'état NACK (test 60). Si tel est le cas, le bloc à l'état NACK ayant le plus petit numéro de séquence BSN est sélectionné à l'étape 61 pour être répété, et ce bloc est ensuite passé à l'état ACK_PENDING dans le tableau V(B) à l'étape 62.

En l'absence de bloc acquitté négativement (aucun bloc à l'état NACK au test 60), le contrôleur 53 exécute les opérations suivantes :
- si V(S) < V(A) + WS *modulo* 2^{SNS} (test 65), il examine s'il y a dans le tampon d'émission 41 un bloc en attente pour le TBF courant avec BSN = V(S) (test 66). La variable V(S) représente le numéro de séquence du « nouveau » bloc à émettre dont le BSN est minimal (initialisée à 0, comme le BSN, au début du TBF) ;
   - si ce bloc BSN = V(S) est en attente d'émission, il est sélectionné à l'étape 67 puis passé à l'état ACK_PENDING dans le tableau V(B) à l'étape 62, après incrémentation d'une unité, *modulo* 2^{SNS}, de la variable V(S) (étape 68) ;
   - si le bloc BSN = V(S) n'est pas encore dans le tampon d'émission 41, le bloc sélectionné à l'étape 69 est le prochain bloc à l'état ACK_PENDING. Ce « prochain bloc » est le plus ancien (BSN minimal) dont la valeur dans le tableau V(B) indique l'état ACK_PENDING, puis le suivant, etc.
- si V(S) = V(A) + WS *modulo* 2^{SNS} au test 65, il y a blocage de la fenêtre d'émission (« stalling ») : l'éventuel bloc en attente avec BSN = V(S) ne peut pas être émis, et le contrôleur passe à l'étape 69 précitée pour sélectionner le prochain bloc à l'état ACK_PENDING.

Quand N > 0 à l'issue des traitements effectués par les modules 55 et 57 d'après un message PDAN répondant à bloc de « polling » donné, le contrôleur 53 tient compte d'un évanouissement dont le début a été détecté par le module 57. Il détermine si les N blocs émis au cours des N périodes d'émission allouées au TBF après le bloc de « polling » auquel a répondu le message PDAN qui a donné lieu à cette valeur N > 0 ont déjà été émis au moins une fois supplémentaire après ces N périodes d'émission. Chaque variable d'état du tableau V(B) qui correspond à l'un de ces N blocs qui n'a pas été ré-émis est passée de l'état ACK_PENDING à l'état NACK. Ceci a pour effet de forcer une répétition en aveugle de ces blocs vraisemblablement mal reçus (étape 69). Cette répétition en aveugle a lieu juste après la répétition du ou des blocs ayant effectivement fait l'objet d'un acquittement négatif.

En EGPRS, le contrôleur 53 peut en outre sélectionner, pour chacune de ces répétitions de l'étape 69 (en aveugle ou non), un niveau de protection contre les erreurs de transmission supérieur à celui résultant des mécanismes généraux d'adaptation de lien, afin d'augmenter la probabilité de bonne réception du bloc répété. Une autre possibilité est d'envoyer, en tant que répétition de ce bloc, de la redondance incrémentale selon un mécanisme connu d'ARQ hybride.

Dans une variante de réalisation de l'invention, la durée typique d'évanouissement D, qui est liée à la vitesse v, peut être estimée directement par une moyenne statistique des durées d'évanouissement, en nombres de blocs, constatées d'après les acquittements négatifs remontés dans les messages PDAN.

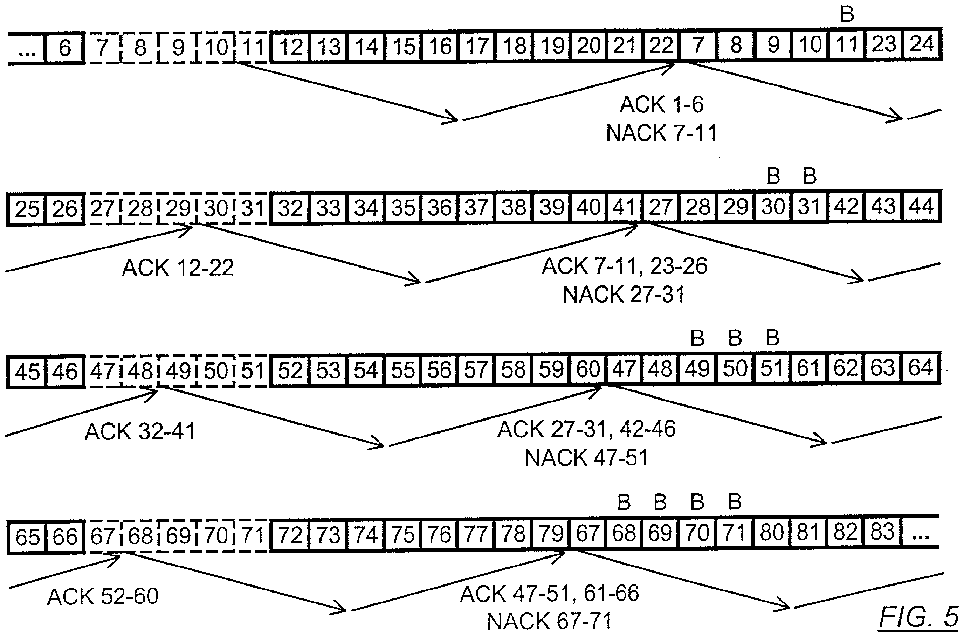

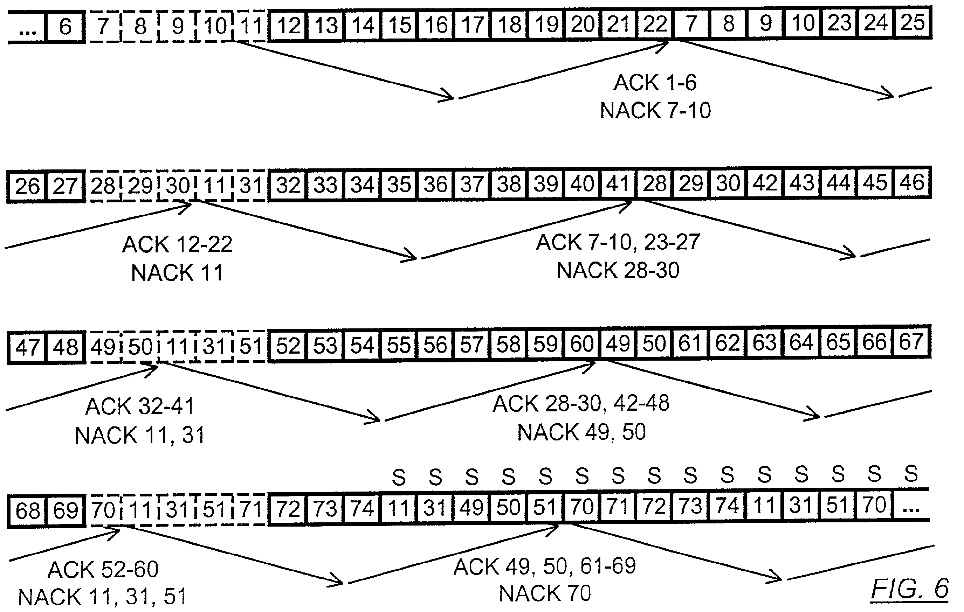

Les figures 5 à 10 illustrent la prise en compte de l'information de vitesse dans le contrôle d'émission des blocs sur un TBF. Les numéros dessinés sont les BSN des blocs. Chaque diagramme correspond à un cas où le PCU active le champ de contrôle d'acquittement (flèches descendantes) tous les douze blocs. Dans chaque diagramme, les blocs représentés en pointillés sont acquittés négativement (ils ont été émis pendant un évanouissement de canal). La même séquence d'évanouissements a été prise en compte sur les six figures, et on suppose, pour mieux montrer les avantages procurés, que chacun de ces évanouissements à la durée D = 5 retenue par le module 56. Les flèches montantes représentent les messages PDAN répondant aux blocs de « polling ». A côté de chacune de ces flèches montantes, on a indiqué les blocs de la fenêtre d'émission qui sont respectivement aux états ACK et NACK après la prise en compte d'un message PDAN (les blocs non spécifiés sont à l'état ACK_PENDING). Les figures 5, 7 et 9 correspondent à la mise en oeuvre de l'invention et sont à comparer respectivement aux figures 6, 8 et 10 correspondant à la mise en oeuvre de la même méthode sans prise en compte de l'information de vitesse.

L'exemple des figures 5 et 6 est un cas EGPRS : le message PDAN peut être élaboré et retourné au PCU alors que les données du bloc de « polling » auquel il répond sont acquittées négativement. On a supposé que le temps d'aller-retour entre l'émission d'un bloc de « polling » par le PCU et sa réception du message PDAN qui lui répond correspond à une période d'environ douze blocs (valeur typique du cas où le PCU est localisé au même endroit que le SGSN). Le symbole « B » sur la figure 5 représente les blocs ré-émis en aveugle par le PCU, parce qu'ils ont été artificiellement placés à l'état NACK en réponse à la détection d'un début d'évanouissement. On voit que ces blocs ré-émis en aveugle diminuent de façon appréciable le retard de transmission sur le TBF par rapport à la méthode classique illustrée par la figure 6. Dans l'exemple dessiné, la méthode classique conduit de plus à un blocage de fenêtre (blocs assortis du symbole « S », répétés à l'état ACK_PENDING suivant l'étape 69 jusqu'à acquittement positif du bloc BSN = 11), que la prise en compte de l'information de vitesse permet d'éviter (cas WS = 64).

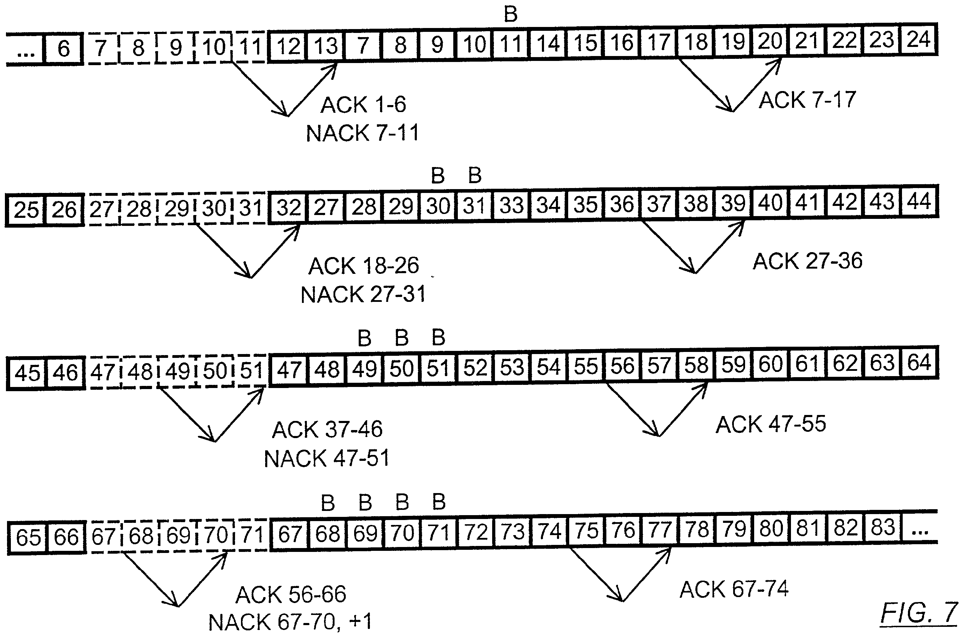

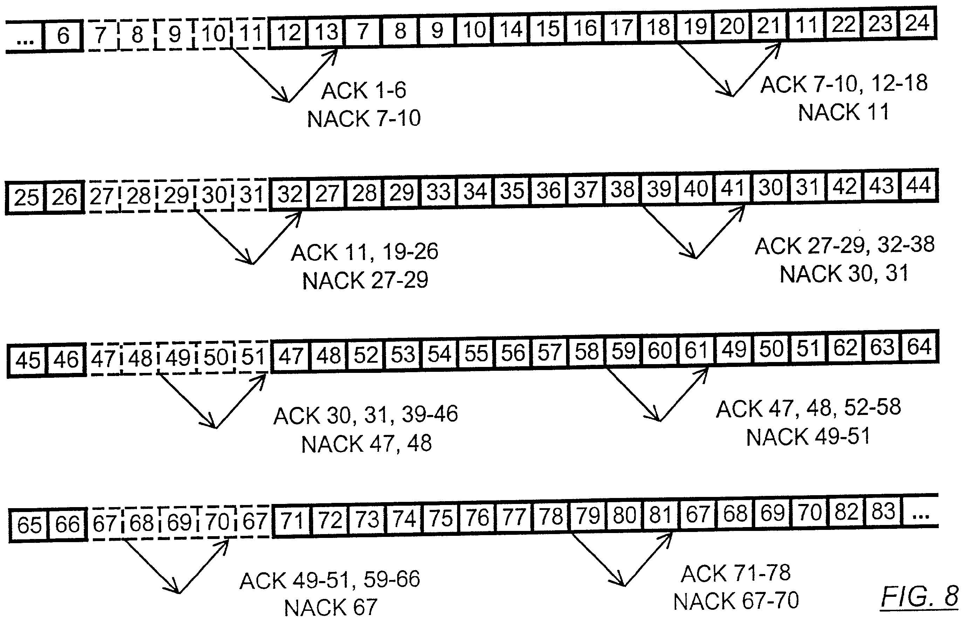

L'exemple des figures 7 et 8 est aussi un cas EGPRS, avec un temps d'aller-retour d'environ trois blocs (valeur typique du cas où le PCU est localisé au même endroit que la BTS). On constate aussi une diminution des retards de transmission (par exemple, le bloc BSN = 30 est reçu dix blocs plus tôt, soit environ 200 ms, sur la figure 7 que sur la figure 8). Dans cet exemple, la durée typique d'évanouissement D est plus longue que le temps d'aller-retour. Il se peut donc (dernières lignes des figures 7 et 8) qu'un évanouissement, dont le début est détecté à réception d'un message PDAN, se prolonge sur un ou plusieurs blocs au delà de cette réception. Lorsque cela se produit, le contrôleur 53 retarde la répétition des blocs à l'état NACK jusqu'à l'expiration de la durée D à compter du début d'évanouissement détecté. Si un bloc est émis avant cette expiration (le bloc BSN = 71 dans l'exemple de la figure 7), le contrôleur 53 le maintient à l'état NACK afin qu'il puisse être ré-émis sans attendre la réception et le traitement du prochain message PDAN. En variante, le contrôleur 53 ne maintient pas ce bloc 71 à l'état NACK après sa première émission, mais il choisit pour cette première émission un schéma de codage plus robuste aux erreurs que celui appliqué aux autres blocs du TBF, afin d'anticiper des conditions de propagation difficiles grâce à l'information de vitesse.

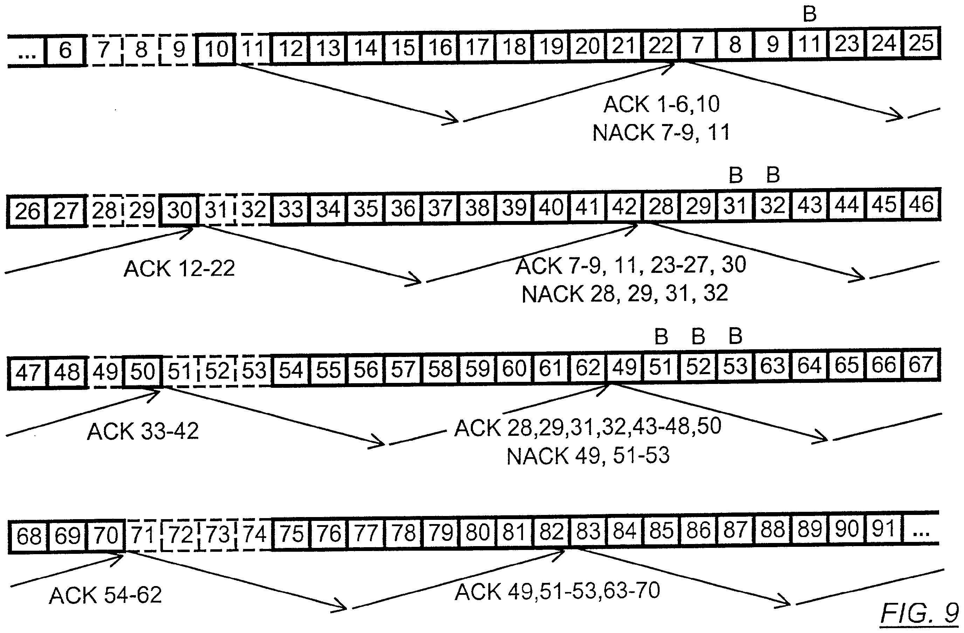

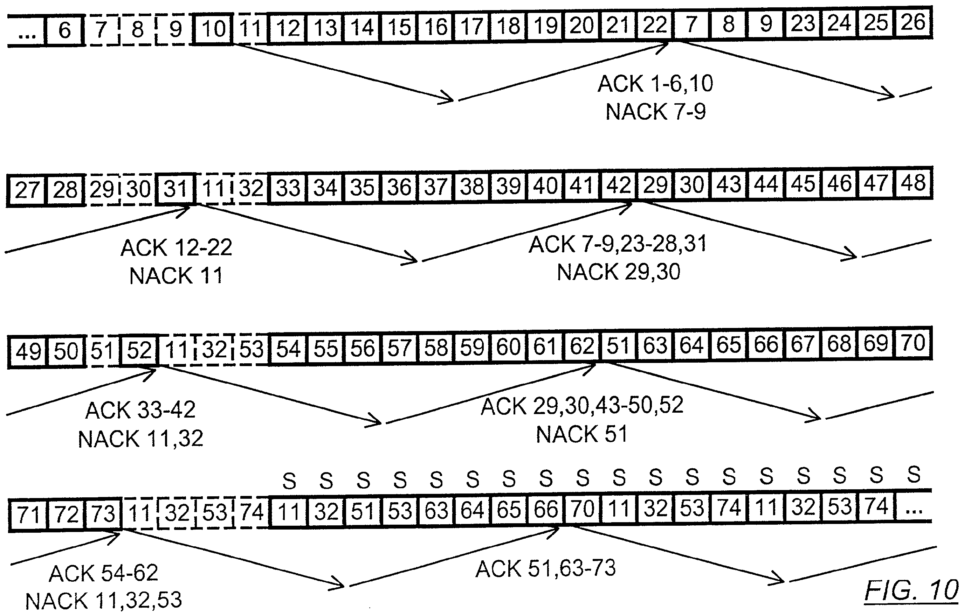

L'exemple des figures 9 et 10 est un cas GPRS, avec un temps d'aller-retour d'environ douze blocs. On peut voir que dans ce cas aussi, la prise en compte de l'information de vitesse diminue le retard de transmission sur le TBF et réduit la probabilité de blocage de fenêtre.

## Revendications

1. Unité d'émission de blocs de données sur un canal de communication comportant un lien radio entre deux stations incluant une station mobile, comprenant des moyens (41,53) d'obtention d'une séquence de blocs de données à émettre sur ledit canal, des moyens (55) de réception d'informations d'acquittement des blocs de la séquence depuis une unité destinataire et des moyens de contrôle de l'émission des blocs de la séquence sur le canal sur la base d'informations de contrôle d'émission incluant les informations d'acquittement reçues de l'unité destinataire et un indicateur d'évanouissement, N, déduit desdites informations d'acquittement et d'une grandeur estimée (v) liée à une vitesse de déplacement de la station mobile, dans laquelle les moyens de contrôle comprennent des moyens (56) de détermination d'une durée typique d'évanouissement de canal, D, en fonction de ladite grandeur estimée, v, liée à la vitesse de la station mobile, et des moyens de détection d'évanouissements de canal couvrant chacun un ou plusieurs blocs émis consécutivement, le début et la fin d'un évanouissement étant détectés sur la base des informations d'acquittement reçues depuis l'unité destinataire, et dans laquelle les moyens de contrôle sont agencés pour contrôler l'émission des blocs en tenant compte des évanouissements détectées sur une durée inférieure à la durée typique déterminée, dont le début a été détecté après la réception d'informations d'acquittement, mais dont la fin n'as pas encore été détectée, ayant pour effet de forcer une répétition en aveugle des blocs qui n'ont pas déjà été émis au moins une fois supplémentaire après N périodes d'émission qui suivent le bloc auquel les informations d'acquittement ont répondu.

2. Unité d'émission selon la revendication 1, dans laquelle les moyens de contrôle comprennent des moyens de sélection (53) de blocs de la séquence à émettre respectivement sur le canal au cours de périodes d'émission successivement affectées à l'unité destinataire, le bloc sélectionné pour une période d'émission étant fonction des informations d'acquittement reçues de l'unité destinataire et de ladite grandeur estimée, v, liée à la vitesse de la station mobile.

3. Unité d'émission selon la revendication 2, comprenant des moyens (53) d'activation intermittente d'un champ de contrôle d'acquittement prévu dans un en-tête de chaque bloc émis sur le canal, pour requérir un acquittement de blocs de la part de l'unité destinataire, dans laquelle les moyens de contrôle comprennent des moyens (55) de traitement des informations d'acquittement reçues depuis l'unité destinataire en réponse à la réception d'un bloc ayant le champ de contrôle d'acquittement activé, pour affecter un premier état (ACK) aux blocs de la séquence acquittés par l'unité destinataire, un second état (NACK) aux blocs non acquittés de la séquence qui n'ont pas été émis après ledit bloc ayant le champ de contrôle d'acquittement activé et un troisième état (ACK_PENDING) aux blocs non acquittés de la séquence qui ont été émis après ledit bloc ayant le champ de contrôle d'acquittement activé, et dans laquelle les moyens de sélection de blocs (53) sont agencés pour sélectionner un bloc de la séquence pour chaque période d'émission affectée à l'unité destinataire sur la base des états respectivement affectés aux blocs précédemment émis sur le canal et de ladite grandeur estimée (v) liée à la vitesse de la station mobile.

4. Unité d'émission selon la revendication 3, dans laquelle, en réponse à la détection d'un évanouissement sur une durée inférieure à la durée typique déterminée (D), dont le début a été détecté après la réception d'informations d'acquittement répondant à la réception d'un bloc ayant le champ de contrôle d'acquittement activé mais dont la fin n'a pas été détectée, les moyens de contrôle sont agencés pour affecter le second état à au moins un bloc non acquitté de la séquence qui a été émis après ledit bloc ayant le champ de contrôle d'acquittement activé et avant que la durée typique déterminée se soit écoulée à compter du début de l'évanouissement détecté.

5. Unité d'émission selon la revendication 4, dans laquelle une protection plus forte contre les erreurs de transmission est appliquée au champ de contrôle d'acquittement qu'à une partie au moins des données de chaque bloc.

6. Unité d'émission selon la revendication 4, dans laquelle protection plus forte contre les erreurs de transmission est appliquée aux blocs ayant le champ de contrôle d'acquittement activé qu'aux blocs n'ayant pas le champ de contrôle d'acquittement activé.

7. Unité d'émission selon la revendication 1, dans laquelle les moyens de contrôle comprennent des moyens (53) de sélection d'un niveau de protection contre les erreurs pour la transmission de chaque bloc de la séquence à émettre respectivement sur le canal au cours de périodes d'émission successivement affectées à l'unité destinataire, le niveau sélectionné pour une période d'émission étant fonction des informations d'acquittement reçues de l'unité destinataire et de ladite grandeur estimée (v) liée à la vitesse de la station mobile, dans lequel les niveaux de protection contre les erreurs résultent optionnellement d'un codage de canal de rendement réglable auquel les blocs sont soumis.

8. Procédé d'obtention de blocs de données sur un canal de communication comportant un lien radio entre deux stations incluant une station mobile, comprenant des étapes consistant à :
- obtenir une séquence de blocs de données à émettre sur ledit canal,
- recevoir des informations d'acquittement des blocs de la séquence depuis une unité destinataire et
- contrôler l'émission des blocs de la séquence sur le canal sur la base d'informations de contrôle d'émission incluant les informations d'acquittement reçues de l'unité destinataire et un indicateur d'évanouissement déduit desdites informations d'acquittement et d'une grandeur estimée (v) liée à une vitesse de déplacement de la station mobile,
- l'étape consistant à contrôler l'émission des blocs de la séquence sur le canal comprenant des étapes consistant à :
déterminer la durée typique d'évanouissement de canal (D) en fonction de ladite grandeur estimée (v) liée à la vitesse de la station mobile, et
détecter l'évanouissement de canal couvrant chacun un ou plusieurs blocs émis consécutivement, le début et la fin d'un évanouissement étant détectés sur la base des informations d'acquittement reçues depuis l'unité destinataire,
l'étape consistant à contrôler l'émission des blocs de la séquence sur le canal s'effectuant en tenant compte des évanouissements détectées sur une durée inférieure à la durée typique déterminée, dont le début a été détecté après la réception d'informations d'acquittement, mais dont la fin n'as pas encore été détectée, ayant pour effet de forcer une répétition en aveugle des blocs qui n'ont pas déjà été émis au moins une fois supplémentaire après N périodes d'émission qui suivent le bloc auquel les informations d'acquittement ont répondu.

9. Procédé d'émission selon la revendication 8, dans lequel l'étape consistant à contrôler l'émission des blocs de la séquence sur le canal comprend une étape consistant à sélectionner des blocs de la séquence à émettre respectivement sur le canal au cours de périodes d'émission successivement affectées à l'unité destinataire, le bloc sélectionné pour une période d'émission étant fonction des informations d'acquittement reçues de l'unité destinataire et de ladite grandeur estimée (v) liée à la vitesse de la station mobile.

10. Procédé d'émission selon la revendication 10, comprenant une étape consistant à :
- activer de façon intermittente un champ de contrôle d'acquittements prévu dans un en-tête de chaque bloc émis sur le canal, pour requérir un acquittement de blocs de la part de l'unité destinataire, et dans lequel
- l'étape consistant à contrôler l'émission des blocs de la séquence sur un canal comprend une étape consistant à :
- traiter des informations d'acquittement reçues depuis l'unité destinataire en réponse à la réception d'un bloc ayant le champ de contrôle d'acquittement activé, pour affecter un premier état (ACK) aux blocs de la séquence acquittés par l'unité destinataire, un second étant (NACK) aux blocs non acquittés de la séquence qui n'ont pas été émis après ledit bloc ayant le champ de contrôle d'acquittement activé et un troisième état (ACK_PENDING) aux blocs non acquittés de la séquence qui ont été émis après ledit bloc ayant le champ de contrôle d'acquittement activé, et dans lequel
- l'étape consistant à sélectionner des blocs (53) comprend sélectionner un bloc de la séquence pour chaque période d'émission affectée à l'unité destinataire sur la base des états respectivement affectés aux blocs précédemment émis sur le canal et de ladite grandeur estimée (v) liée à la vitesse de la station mobile.

11. Procédé d'émission selon chacune des revendications 8 et 11, dans lequel l'étape consistant à contrôler l'émission des blocs de la séquence sur le canal comprend une étape consistant à :
- affecter, en réponse à la détection d'un évanouissement sur une durée inférieure à la durée typique déterminée (D), dont le début a été détecté après la réception d'informations d'acquittement répondant à la réception d'un bloc ayant le champ de contrôle d'acquittement activé mais dont la fin n'a pas été détectée, le second état à au moins un bloc non acquitté de la séquence qui a été émis après ledit bloc ayant le champ de contrôle d'acquittement activé et avant que la durée typique déterminée se soit écoulée à compter du début de l'évanouissement détecté.

12. Procédé d'émission selon la revendication 11, comprenant une étape consistant à appliquer une protection plus forte contre les erreurs de transmission au champ de contrôle d'acquittement qu'à une partie au moins des données de chaque bloc.

13. Procédé d'émission selon la revendication 11, comprenant une étape consistant à appliquer une protection plus forte contre les erreurs de transmission aux blocs ayant le champ de contrôle d'acquittement activé qu'aux blocs n'ayant pas le champ de contrôle activé.

14. Procédé d'émission selon la revendication 8, dans lequel l'étape consistant à contrôler l'émission des blocs de la séquence sur le canal comprend une étape consistant à :
- sélectionner un niveau de protection contre les erreurs pour la transmission de chaque bloc de la séquence à émettre respectivement sur le canal au cours de périodes d'émission successivement affectées à l'unité destinataire, le niveau sélectionné pour une période d'émission étant fonction des informations d'acquittement reçues de l'unité destinataire et de ladite grandeur estimée (v) liée à la vitesse de la station mobile, les niveaux de protection contre les erreurs résultant optionnellement d'un codage de canal de rendement réglable auquel les blocs sont soumis.

## Patentansprüche

1. Einheit zum Senden von Datenblöcken auf einem Kommunikationskanal, umfassend eine Funkverbindung zwischen zwei Stationen, die eine Mobilstation umfassen, umfassend Mittel (41, 53) zum Erhalten einer Sequenz von Datenblöcken, die auf dem Kanal zu senden sind, Mittel (55) zum Empfangen von Bestätigungsinformationen der Blöcke der Sequenz von einer Empfängereinheit und Mittel zum Kontrollieren des Sendens der Blöcke der Sequenz auf dem Kanal auf der Grundlage von Informationen zum Kontrollieren des Sendens, umfassend die Bestätigungsinformationen, die von der Empfängereinheit empfangen werden, und einen Schwund-Indikator N, der aus den Bestätigungsinformationen und einer geschätzten Größe v abgeleitet ist, die mit einer Bewegungsgeschwindigkeit der Mobilstation verbunden ist, wobei die Mittel zum Kontrollieren Mittel (56) zum Bestimmen einer typischen Kanalschwund-Dauer D in Abhängigkeit von der geschätzten Größe v, die mit der Geschwindigkeit der Mobilstation verbunden ist, und Mittel zum Erfassen von Kanalschwund aufweisen, der jeweils einen oder mehrere Blöcke abdeckt, die nacheinander gesendet werden, wobei der Beginn und das Ende eines Schwunds auf der Grundlage der Bestätigungsinformationen erfasst werden, die von der Empfängereinheit empfangen werden, und wobei die Mittel zum Kontrollieren ausgebildet sind, um das Senden der Blöcke zu kontrollieren, indem der Schwund berücksichtigt wird, der über eine Dauer erfasst wird, die kürzer als die bestimmte typische Dauer ist, deren Beginn nach dem Empfangen von Bestätigungsinformationen erkannt worden ist, aber deren Ende noch nicht erfasst worden ist, was zur Folge hat, dass ein blindes Wiederholen der Blöcke erzwungen wird, die nicht bereits mindestens ein zusätzliches Mal nach N Sendeperioden gesendet worden sind, die auf den Block folgen, auf den die Bestätigungsinformationen geantwortet haben.

2. Einheit zum Senden nach Anspruch 1, wobei die Mittel zum Kontrollieren Mittel zum Auswählen (53) von Blöcken der Sequenz aufweisen, die jeweils auf dem Kanal im Laufe von aufeinanderfolgenden Sendeperioden, die der Empfängereinheit zugeordnet sind, zu senden sind, wobei der Block, der für eine Sendeperiode ausgewählt ist, von den Bestätigungsinformationen, die von der Empfängereinheit empfangen werden und von der geschätzten Größe v abhängig ist, die mit der Geschwindigkeit der Mobilstation verbunden ist.

3. Einheit zum Senden nach Anspruch 2, umfassend Mittel (53) zum intermittierenden Aktivieren eines Bestätigungskontrollfeldes, das in einer Kopfzeile von jedem Block vorgesehen ist, der auf dem Kanal gesendet wird, um eine Bestätigung von Blöcken von der Empfängereinheit anzufordern, wobei die Mittel zum Kontrollieren Mittel (55) zum Verarbeiten der Bestätigungsinformationen, die von der Empfängereinheit empfangen werden, als Antwort auf das Empfangen eines Blocks, der das Bestätigungskontrollfeld aktiviert hat, aufweisen, um einen ersten Zustand (ACK) den Blöcken der Sequenz, die von der Empfängereinheit bestätigt werden, einen zweiten Zustand (NACK) den Blöcken, die von der Sequenz nicht bestätigt werden, die nicht nach dem Block gesendet worden sind, der das Bestätigungskontrollfeld aktiviert hat, und einen dritten Zustand (ACK_PENDING) den Blöcken zuzuordnen, die von der Sequenz nicht bestätigt werden, die nach dem Block gesendet worden sind, der das Bestätigungskontrollfeld aktiviert hat, und wobei die Mittel zum Auswählen von Blöcken (53) ausgebildet sind, um einen Block der Sequenz für jede Sendeperiode, die der Empfängereinheit zugeordnet ist, auf der Grundlage der Zustände, die jeweils den Blöcken zugeordnet sind, die zuvor auf dem Kanal gesendet worden sind, und der geschätzten Größe v, die mit der Geschwindigkeit der Mobilstation verbunden ist, auszuwählen.

4. Einheit zum Senden nach Anspruch 3, wobei als Antwort auf das Erfassen eines Schwunds über eine Dauer, die kürzer als die bestimmte typische Dauer D ist, deren Beginn nach dem Empfangen von Bestätigungsinformationen erkannt worden ist, die auf das Empfangen eines Blocks antworten, der das Bestätigungskontrollfeld aktiviert hat, aber deren Ende noch nicht erfasst worden ist, die Mittel zum Kontrollieren ausgebildet sind, um den zweiten Zustand mindestens einem nicht erfassten Block der Sequenz zuzuordnen, der nach dem Block gesendet worden ist, der das Bestätigungskontrollfeld aktiviert hat, und bevor die bestimmte typische Dauer ab Beginn des erfassten Schwunds abgelaufen ist.

5. Einheit zum Senden nach Anspruch 4, wobei ein stärkerer Schutz gegen die Sendefehler auf das Bestätigungskontrollfeld als auf mindestens einen Teil der Daten von jedem Block angewendet wird.

6. Einheit zum Senden nach Anspruch 4, wobei ein stärkerer Schutz gegen die Sendefehler auf Blöcke, die das Bestätigungskontrollfeld aktiviert haben, als auf die Blöcke, die das Bestätigungskontrollfeld nicht aktiviert haben, angewendet wird.

7. Einheit zum Senden nach Anspruch 1, wobei die Mittel zum Kontrollieren Mittel (53) zum Auswählen eines Schutzniveaus gegen die Fehler für das Senden von jedem Block der Sequenz aufweisen, die jeweils auf dem Kanal im Laufe von aufeinanderfolgenden Sendeperioden, die der Empfängereinheit zugeordnet sind, zu senden sind, wobei das Schutzniveau, das für eine Sendeperiode ausgewählt ist, von den Bestätigungsinformationen, die von der Empfängereinheit empfangen werden, und von der geschätzten Größe v abhängig ist, die mit der Geschwindigkeit der Mobilstation verbunden ist, wobei die Schutzniveaus gegen die Fehler optional aus einer einstellbaren Codierung des Leistungskanals resultieren, der die Blöcke unterzogen werden.

8. Verfahren zum Erhalten von Datenblöcken auf einem Kommunikationskanal, umfassend eine Funkverbindung zwischen zwei Stationen, die eine Mobilstation umfassen, das die Schritte aufweist, die darin bestehen:
- eine Sequenz von Datenblöcken zu erhalten, die auf dem Kanal zu senden sind,
- die Bestätigungsinformationen der Blöcke der Sequenz von einer Empfängereinheit zu empfangen und
- das Senden der Blöcke der Sequenz auf dem Kanal auf der Grundlage von Informationen zum Kontrollieren des Sendens zu kontrollieren, umfassend die Bestätigungsinformationen, die von der Empfängereinheit empfangen werden, und einen Schwund-Indikator N, der aus den Bestätigungsinformationen und einer geschätzten Größe v abgeleitet wird, die mit einer Bewegungsgeschwindigkeit der Mobilstation verbunden ist,
- wobei der Schritt, der darin besteht, das Senden der Blöcke der Sequenz auf dem Kanal zu kontrollieren, die Schritte aufweist, die darin bestehen:
die typische Kanalschwund-Dauer D in Abhängigkeit von der geschätzten Größe v, die mit der Geschwindigkeit der Mobilstation verbunden ist, zu bestimmen und den Kanalschwund zu erfassen, der jeweils einen oder mehrere Blöcke abdeckt, die nacheinander gesendet werden, wobei der Beginn und das Ende eines Schwunds auf der Grundlage der Bestätigungsinformationen erfasst werden, die von der Empfängereinheit empfangen werden, wobei der Schritt, der darin besteht, das Senden der Blöcke der Sequenz auf dem Kanal zu kontrollieren, durchgeführt wird, indem der Schwund berücksichtigt wird, der über eine Dauer erfasst wird, die kürzer als die bestimmte typische Dauer ist, deren Beginn nach dem Empfangen von Bestätigungsinformationen erkannt worden ist, aber deren Ende noch nicht erfasst worden ist, was zur Folge hat, dass ein blindes Wiederholen der Blöcke erzwungen wird, die nicht bereits mindestens ein zusätzliches Mal nach N Sendeperioden gesendet worden sind, die auf den Block folgen, auf den die Bestätigungsinformationen geantwortet haben.

9. Verfahren zum Senden nach Anspruch 8, wobei der Schritt, der darin besteht, das Senden der Blöcke der Sequenz auf dem Kanal zu kontrollieren, einen Schritt aufweist, der darin besteht, Blöcke der Sequenz auszuwählen, die jeweils auf dem Kanal im Laufe von aufeinanderfolgenden Sendeperioden, die der Empfängereinheit zugeordnet werden, zu senden sind, wobei der Block, der für eine Sendeperiode ausgewählt wird, von den Bestätigungsinformationen, die von der Empfängereinheit empfangen werden, und von der geschätzten Größe v abhängig ist, die mit der Geschwindigkeit der Mobilstation verbunden ist.

10. Verfahren zum Senden nach Anspruch 9, umfassend einen Schritt, der darin besteht:
- intermittierend ein Bestätigungskontrollfeld zu aktivieren, das in einer Kopfzeile von jedem Block vorgesehen wird, der auf dem Kanal gesendet wird, um eine Bestätigung von Blöcken von der Empfängereinheit anzufordern, und wobei
- der Schritt, der darin besteht, das Senden der Blöcke der Sequenz auf dem Kanal zu kontrollieren, einen Schritt aufweist, der darin besteht:
- Bestätigungsinformationen, die von der Empfängereinheit empfangen werden, als Antwort auf das Empfangen eines Blocks, der das Bestätigungskontrollfeld aktiviert hat, zu verarbeiten, um einen ersten Zustand (ACK) den Blöcken der Sequenz, die von der Empfängereinheit bestätigt werden, einen zweiten Zustand (NACK) den Blöcken, die von der Sequenz nicht bestätigt werden, die nicht nach dem Block gesendet worden sind, der das Bestätigungskontrollfeld aktiviert hat, und einen dritten Zustand (ACK_PENDING) den Blöcken zuzuordnen, die von der Sequenz nicht bestätigt werden, die nach dem Block gesendet worden sind, der das Bestätigungskontrollfeld aktiviert hat, und wobei
- der Schritt, der darin besteht, Blöcke (53) auszuwählen, das Auswählen eines Blocks der Sequenz für jede Sendeperiode, die der Empfängereinheit zugeordnet wird, auf der Grundlage der Zustände, die jeweils den Blöcken zugeordnet werden, die zuvor auf dem Kanal gesendet worden sind, und der geschätzten Größe v, die mit der Geschwindigkeit der Mobilstation verbunden ist, aufweist.

11. Verfahren zum Senden nach einem der Ansprüche 8 und 10, wobei der Schritt, der darin besteht, das Senden der Blöcke der Sequenz auf dem Kanal zu kontrollieren, einen Schritt aufweist, der darin besteht:
- als Antwort auf das Erfassen eines Schwunds über eine Dauer, die kürzer als die bestimmte typische Dauer D ist, deren Beginn nach dem Empfangen von Bestätigungsinformationen erkannt worden ist, die auf das Empfangen eines Blocks antworten, der das Bestätigungskontrollfeld aufweist, das auf das Empfangen eines Blocks antwortet, aber deren Ende noch nicht erfasst worden ist, den zweiten Zustand mindestens einem nicht erfassten Block der Sequenz zuzuordnen, der nach dem Block gesendet worden ist, der das Bestätigungskontrollfeld aktiviert hat, und bevor die bestimmte typische Dauer ab Beginn des erfassten Schwunds abgelaufen ist.

12. Verfahren zum Senden nach Anspruch 11, umfassend einen Schritt, der darin besteht, einen stärkeren Schutz gegen die Sendefehler auf das Bestätigungskontrollfeld als auf mindestens einen Teil der Daten von jedem Block anzuwenden.

13. Verfahren zum Senden nach Anspruch 11, umfassend einen Schritt, der darin besteht, einen stärkeren Schutz gegen die Sendefehler auf Blöcke, die das Bestätigungskontrollfeld aktiviert haben, als auf die Blöcke, die das Bestätigungskontrollfeld nicht aktiviert haben, anzuwenden.

14. Verfahren zum Senden nach Anspruch 8, wobei der Schritt, der darin besteht, das Senden der Blöcke der Sequenz auf dem Kanal zu kontrollieren, einen Schritt aufweist, der darin besteht:
- ein Schutzniveau gegen die Fehler für das Senden von jedem Block der Sequenz auszuwählen, die jeweils auf dem Kanal im Laufe von aufeinanderfolgenden Sendeperioden, die der Empfängereinheit zugeordnet werden, zu senden sind, wobei das Schutzniveau, das für eine Sendeperiode ausgewählt wird, von den Bestätigungsinformationen, die von der Empfängereinheit empfangen werden, und von der geschätzten Größe v abhängig ist, die mit der Geschwindigkeit der Mobilstation verbunden ist, wobei die Schutzniveaus gegen die Fehler optional aus einer einstellbaren Codierung des Leistungskanals resultieren, der die Blöcke unterzogen werden.

## Claims

1. Unit for transmitting data blocks on a communication channel including a radio link between two stations including a mobile station, comprising means (41, 53) for obtaining a sequence of data blocks to be transmitted on said channel, means (55) for receiving acknowledgement information for the blocks of the sequence from a recipient unit, and means for controlling the transmission of the blocks of the sequence on the channel on the basis of transmission control information including the acknowledgement information received from the recipient unit and a fadeout indicator, N, deduced from said acknowledgement information and from an estimated value, v, linked to a speed of movement of the mobile station, wherein the control means comprise means (56) for determining a typical channel fadeout duration, D, depending on said estimated value, v, linked to the speed of the mobile station, and means for detecting channel fadeouts each covering one or more consecutively transmitted blocks, the start and the end of a fadeout being detected on the basis of the acknowledgement information received from the recipient unit, and wherein the control means are designed to control the transmission of the blocks by taking into account the fadeouts detected over a duration shorter than the determined typical duration, the start of which was detected after reception of acknowledgement information but the end of which has not yet been detected, having the effect of forcing a blind repetition of the blocks that have not already been transmitted at least one additional time after N transmission periods that follow the block to which the acknowledgement information responded.

2. Transmission unit according to Claim 1, wherein the control means comprise means (53) for selecting blocks of the sequence to be respectively transmitted on the channel during transmission periods sequentially assigned to the recipient unit, the block selected for a transmission period depending on the acknowledgement information received from the recipient unit and on said estimated value, v, linked to the speed of the mobile station.

3. Transmission unit according to Claim 2, comprising means (53) for intermittently activating an acknowledgement control field provided in a header of each block transmitted on the channel, in order to request acknowledgement of blocks from the recipient unit, wherein the control means comprise means (55) for processing the acknowledgement information received from the recipient unit in response to the reception of a block having the acknowledgement control field activated, in order to assign a first state (ACK) to those blocks of the sequence that are acknowledged by the recipient unit, a second state (NACK) to the unacknowledged blocks of the sequence that were not transmitted after said block having the acknowledgement control field activated, and a third state (ACK_PENDING) to the unacknowledged blocks of the sequence that were transmitted after said block having the acknowledgement control field activated, and wherein the block selection means (53) are designed to select a block of the sequence for each transmission period assigned to the recipient unit on the basis of the states respectively assigned to the blocks transmitted previously on the channel and of said estimated value, v, linked to the speed of the mobile station.

4. Transmission unit according to Claim 3, wherein, in response to the detection of a fadeout over a duration shorter than the determined typical duration, D, the start of which was detected after the reception of acknowledgement information responding to the reception of a block having the acknowledgement control field activated but the end of which was not detected, the control means are designed to assign the second state to at least one unacknowledged block of the sequence that was transmitted after said block having the acknowledgement control field activated and before the determined typical duration had elapsed, starting from the beginning of the detected fadeout.

5. Transmission unit according to Claim 4, wherein stronger protection against transmission errors is applied to the acknowledgement control field than to at least a portion of the data of each block.

6. Transmission unit according to Claim 4, wherein stronger protection against transmission errors is applied to the blocks having the acknowledgement control field activated than to the blocks not having the acknowledgement control field activated.

7. Transmission unit according to Claim 1, wherein the control means comprise means (53) for selecting a level of protection against errors for the transmission of each block of the sequence to be respectively transmitted on the channel during transmission periods that are sequentially assigned to the recipient unit, the level selected for a transmission period depending on the acknowledgement information received from the recipient unit and on said estimated value, v, linked to the speed of the mobile station, wherein the levels of protection against errors optionally result from adjustable-rate channel coding to which the blocks are subjected.

8. Method for obtaining data blocks on a communication channel including a radio link between two stations including a mobile station, comprising steps of:
- obtaining a sequence of data blocks to be transmitted on said channel,
- receiving acknowledgement information for the blocks of the sequence from a recipient unit, and
- controlling the transmission of the blocks of the sequence on the channel on the basis of transmission control information including the acknowledgement information received from the recipient unit and a fadeout indicator, N, deduced from said acknowledgement information and from an estimated value, v, linked to a speed of movement of the mobile station,
- the step of controlling the transmission of the blocks of the sequence on the channel comprising steps of:
determining the typical channel fadeout duration, D, depending on said estimated value, v, linked to the speed of the mobile station, and
detecting the channel fadeout each covering one or more consecutively transmitted blocks, the start and the end of a fadeout being detected on the basis of the acknowledgement information received from the recipient unit,
the step of controlling the transmission of the blocks of the sequence on the channel being performed by taking into account the fadeouts detected over a duration shorter than the determined typical duration, the start of which was detected after reception of acknowledgement information but the end of which has not yet been detected, having the effect of forcing a blind repetition of the blocks that have not already been transmitted at least one additional time after N transmission periods that follow the block to which the acknowledgement information responded.

9. Transmission method according to Claim 8, wherein the step of controlling the transmission of the blocks of the sequence on the channel comprises a step of selecting blocks of the sequence to be respectively transmitted on the channel during transmission periods sequentially assigned to the recipient unit, the block selected for a transmission period depending on the acknowledgement information received from the recipient unit and on said estimated value, v, linked to the speed of the mobile station.

10. Transmission method according to Claim 9, comprising a step of:
- intermittently activating an acknowledgement control field provided in a header of each block transmitted on the channel, in order to request acknowledgement of blocks from the recipient unit, and wherein
- the step of controlling the transmission of the blocks of the sequence on a channel comprises a step of:
- processing acknowledgement information received from the recipient unit in response to the reception of a block having the acknowledgement control field activated, in order to assign a first state (ACK) to those blocks of the sequence that are acknowledged by the recipient unit, a second state (NACK) to the unacknowledged blocks of the sequence that were not transmitted after said block having the acknowledgement control field activated, and a third state (ACK_PENDING) to the unacknowledged blocks of the sequence that were transmitted after said block having the acknowledgement control field activated, and wherein
- the step of selecting the blocks (53) comprises selecting a block of the sequence for each transmission period assigned to the recipient unit on the basis of the states respectively assigned to the blocks transmitted previously on the channel and of said estimated value (v) linked to the speed of the mobile station.

11. Transmission method according to each of Claims 8 and 10, wherein the step of controlling the transmission of the blocks of the sequence on the channel comprises a step of:
- assigning, in response to the detection of a fadeout over a duration shorter than the determined typical duration, D, the start of which was detected after the reception of acknowledgement information responding to the reception of a block having the acknowledgement control field activated but the end of which was not detected, the second state to at least one unacknowledged block of the sequence that was transmitted after said block having the acknowledgement control field activated and before the determined typical duration had elapsed, starting from the beginning of the detected fadeout.

12. Transmission method according to Claim 11, comprising a step of applying stronger protection against transmission errors to the acknowledgement control field than to at least a portion of the data of each block.

13. Transmission method according to Claim 11, comprising a step of applying stronger protection against transmission errors to the blocks having the acknowledgement control field activated than to the blocks not having the control field activated.

14. Transmission method according to Claim 8, wherein the step of controlling the transmission of the blocks of the sequence on the channel comprises a step of:
- selecting a level of protection against errors for the transmission of each block of the sequence to be respectively transmitted on the channel during transmission periods that are sequentially assigned to the recipient unit, the level selected for a transmission period depending on the acknowledgement information received from the recipient unit and on said estimated value, v, linked to the speed of the mobile station, the levels of protection against errors optionally resulting from adjustable-rate channel coding to which the blocks are subjected.
